# EUROPÄISCHE PATENTSCHRIFT

(11) **EP 1 566 238 B1**
(45) Veröffentlichungstag und Bekanntmachung des Hinweises auf die Patenterteilung: **24.05.2006**
(21) Anmeldenummer: 04002750.0
(22) Anmeldetag: 07.02.2004
(51) Int. Cl.: B23Q 5/40, B23Q 1/58

(54) **Elektrischer Linearantrieb mit einer Steckkupplung zwischen einem Spindeltrieb und einem Motormodul**
Electric linear drive with a plug coupling between a driving screw and a drive module
Système électrique de mouvement linéaire avec un accouplement direct entre un système vis-écrou et un module moteur

(43) Veröffentlichungstag der Anmeldung: 24.08.2005
(73) Patentinhaber: FESTO AG & Co, 73734 Esslingen (DE)
(72) Erfinder: RAPP, Martin, 71394 Kernen i.R. (DE); FEYRER, Thomas, 73732 Esslingen (DE)
(74) Vertreter: Abel, Martin

(56) Entgegenhaltungen:
- EP-A- 0 726 118
- US-A- 4 288 182
- US-B1- 6 240 796

## Beschreibung

Die Erfindung betrifft einen elektrischen Linearantrieb, mit einem Hauptgehäuse, an dem ein den Abgriff einer Linearbewegung ermöglichendes Abgriffsteil linear verstellbar gelagert ist, das antriebsmäßig mit dem Ausgangsteil eines in dem Hauptgehäuse angeordneten Spindeltriebes gekoppelt ist, dessen drehbares Eingangsteil über eine Kupplung mit einem rückseitig an dem Hauptgehäuse angeordneten Elektromotor in Antriebsverbindung steht.

Ein aus der US 5676016 oder der EP-0726118-A bekannter elektrischer Linearantrieb dieser Art verfügt über ein Hauptgehäuse, in dem ein Spindeltrieb untergebracht ist, der mit einem schlittenartig ausgebildeten Abgriffsteil gekoppelt ist. Wird das spindelartige Eingangsteil des Spindeltriebes zu einer Drehbewegung veranlasst, führt das Ausgangsteil des Spindeltriebes eine Linearbewegung aus, die sich an dem Abgriffsteil abgreifen lässt. Die Drehbewegung des Eingangsteils wird durch einen an der Rückseite des Hauptgehäuses angeordneten Elektromotor hervorgerufen, dessen Abtriebsteil über eine Kupplung mit dem Eingangsteil des Spindeltriebes drehfest verbunden ist.

Der bekannte Linearantrieb lässt sich nur dadurch sinnvoll zusammenbauen, dass der Elektromotor gemeinsam mit dem vorab daran angebrachten Spindeltrieb installiert wird. Entsprechendes gilt für eine Demontage im Reparaturfall, weil die Kupplung zum Entfernen der den axialen Zusammenhalt gewährleistenden Querstifte nicht ohne weiteres zugänglich ist.

Es ist daher die Aufgabe der vorliegenden Erfindung, einen elektrischen Linearantrieb der eingangs genannten Art zu schaffen, dessen Montage und Demontage einfacher vonstatten geht.

Zur Lösung dieser Aufgabe ist vorgesehen, dass die Kupplung als reine Steckkupplung ausgeführt und unmittelbar von einem Zahnradgetriebe gebildet ist, das ein mit dem Eingangsteil des Spindeltriebes drehfest verbundenes, bezüglich des Hauptgehäuses ortsfest fixiertes erstes Getriebezahnrad und ein mit dem Abtriebsteil des Elektromotors verbundenes zweites Getriebezahnrad enthält, wobei das zweite Getriebezahnrad gemeinsam mit dem Elektromotor Bestandteil eines Motormoduls ist, das unabhängig von der momentan zwischen dem Eingangsteil und dem Ausgangsteil des Spindeltriebes eingenommenen Relativposition, und bei gleichzeitig selbsttätigem Herstellen bzw. Aufheben des Zahnradeingriffes zwischen den beiden Getriebezahnrädern, rückseitig am Hauptgehäuse ansetzbar und abnehmbar ist.

Auf diese Weise kann der Elektromotor unabhängig vom Spindeltrieb installiert und deinstalliert werden. Die rein als Steckkupplung ausgestaltete Kupplung erfordert keine gegenseitige Arretierung der miteinander zu kuppelnden Elemente, sodass beim Ansetzen und Abnehmen des den Elektromotor aufweisenden Motormoduls automatisch der Kupplungseingriff hergestellt bzw. aufgehoben wird. Dies ist nicht nur bei der Erstmontage und in Servicefällen von Vorteilen. Auch bei einer notwendigen Umrüstung des Linearantriebes auf eine andere Leistung oder eine andere Übersetzung erweist sich die problemlose Austauschmöglichkeit als vorteilhaft. Schließlich kann durch die Ausgestaltung der Steckkupplung als Zahnradgetriebe die für die Kupplungsmaßnahmen erforderliche Baulänge bei Bedarf reduziert werden, da die miteinander in Eingriff stehenden Getriebezahnräder quer zur Längsachse des Linearantriebes nebeneinander angeordnet werden können.

Vorteilhafte Weiterbildungen der Erfindung gehen aus den Unteransprüchen hervor.

Die beiden Getriebezahnräder sind zweckmäßigerweise als am Außenumfang verzahnte Stirnräder ausgeführt, die parallel versetzt zueinander angeordnet sind und deren Drehachsen in Richtung einer gedachten Montageachse ausgerichtet sind, entlang der die Motoreinheit beim Ansetzen bzw. Abnehmen an das bzw. von dem Hauptgehäuse verlagert wird. Auf diese Weise gelangen die beiden Getriebezahnräder auf besonders einfache Weise unmittelbar beim Ansetz- und Abnehmvorgang in bzw. außer Eingriff miteinander. Besonders zweckmäßig ist dabei eine Ausgestaltung der Stirnräder mit einer umfangsseitigen Geradverzahnung, wenngleich prinzipiell auch eine schrägverzahnte Bauform möglich wäre.

Um beim Ansetzen des Motormoduls automatisch die korrekte Position zu erhalten, ist es von Vorteil, wenn dem Hauptgehäuse und dem Motormodul zueinander komplementäre Steckzentriermittel zugeordnet sind, die beim Ansetzen des Motormoduls an das Hauptgehäuse miteinander in Steckeingriff gelangen.

Damit sich das Motormodul bei Bedarf sehr rasch montieren und demontieren lässt, ist es im an das Hauptgehäuse angesteckten Zustand zweckmäßigerweise lediglich durch eine oder mehrere Befestigungsschrauben arretiert. Sind die Befestigungsschrauben gelöst, lässt sich das Motormodul ohne weiteres vom Hauptgehäuse abziehen.

Der Elektromotor kann als Baueinheit in einem Modulgehäuse des Motormoduls untergebracht sein. Er ist insbesondere lösbar eingesetzt, sodass bei Bedarf ein Austausch möglich ist, beispielsweise im Defektfalle oder zur Umrüstung auf eine andere Motorleistung.

Im Zusammenhang mit der Erfindung können alternativ mehrere Motormodule bereitgestellt werden, die sich in der am zweiten Getriebezahnrad abgreifbaren Drehzahl unterscheiden und die wahlweise an einem Hauptgehäuse installierbar sind, um den Spindeltrieb mit - dem jeweiligen Anwendungsfall entsprechend - unterschiedlichen Drehzahlen anzutreiben. Hier wäre es beispielsweise möglich, die mehreren Motormodule mit unterschiedlichen Elektromotoren auszustatten. Eine wesentlich einfachere Lösung sieht vor, auf identische Elektromotoren zurückzugreifen, jedoch zwischen dem Elektromotor und dem zweiten Getriebezahnrad ein zur Unter- oder Übersetzung dienendes Zwischengetriebe vorzusehen, das bei entsprechender Auslegung die Drehzahl des Elektromotors in die gewünschte Drehzahl des zweiten Getriebezahnrades umsetzt. Das Zwischengetriebe ist insbesondere als Planetengetriebe ausgeführt.

Das Hauptgehäuse, das Abgriffsteil und der Spindeltrieb.können zu einer Arbeitseinheit zusammengefasst sein, wobei der Spindeltrieb als Modul ausgeführt ist, das lösbar in einer Aufnahme des Hauptgehäuses fixiert ist. Der Spindeltrieb kann somit als Ganzes installiert und deinstalliert werden, was zum einen Reparaturen erleichtert und zum anderen eine leichte Umrüstung des Linearantriebes auf beispielsweise andere Gewindesteigungen oder auf andere Bauarten des Spindeltriebes ermöglicht. Auf diese Weise kann beispielsweise eine Ausstattung mit wahlweise einem Kugelgewindetrieb oder einem Gleitgewindetrieb vorgenommen werden.

Bei Bedarf kann das Motormodul mit einem Encoder ausgestattet sein, der die Drehbewegung des Elektromotors auswertet und somit quasi als Wegmesssystem zur Positionserfassung des linear verstellbaren Abgriffsteils eingesetzt werden kann.

Nachfolgend wird die Erfindung anhand der beiliegenden Zeichnung näher erläutert. In dieser zeigen:

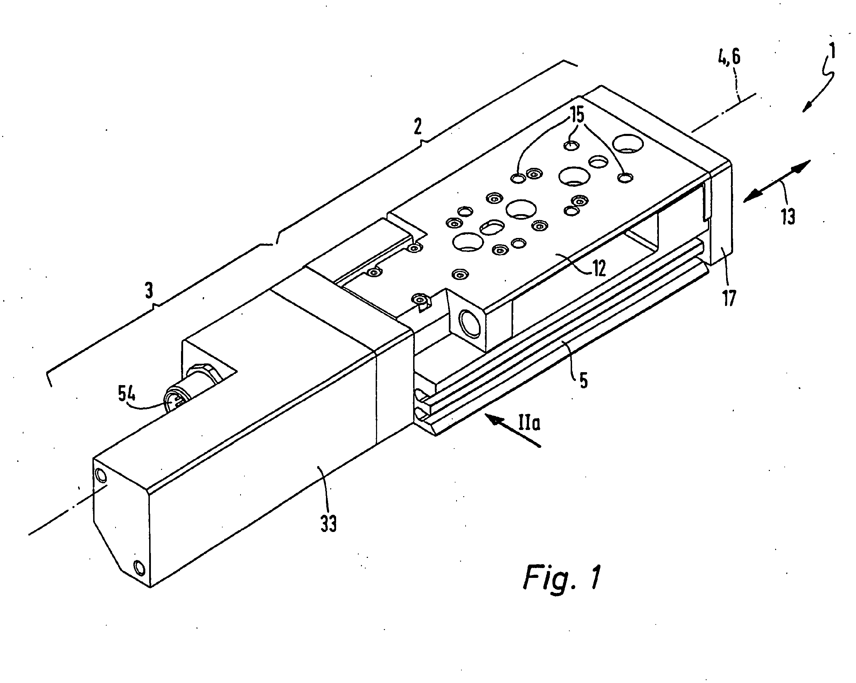

- Fig. 1: eine bevorzugte Bauform des erfindungsgemäßen elektrischen Linearantriebs in einer perspektivischen Darstellung,

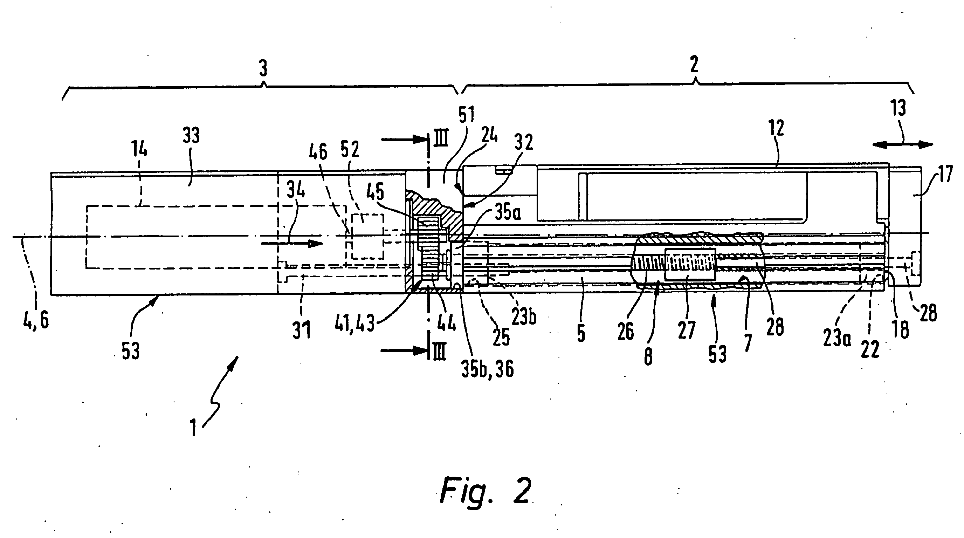

- Fig. 2: den Linearantrieb aus Fig. 1 in einer Seitenansicht gemäß Pfeil IIa, wobei der Bereich der Steckkupplung im Sinne der Schnittlinie IIb-IIb aus Fig. 3 aufgebrochen dargestellt ist,
- Fig. 3: einen Querschnitt durch den Linearantrieb gemäß Schnittlinie III-III aus Fig. 2 und

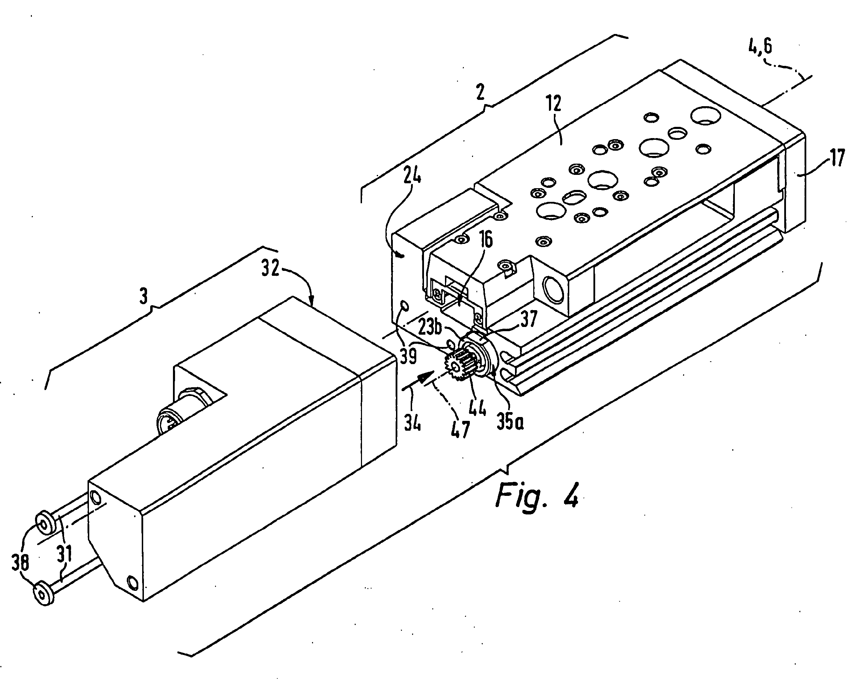

- Fig. 4: den Linearantrieb aus Fig. 1 im abgenommenen Zustand des Motormoduls.

Der insgesamt mit Bezugsziffer 1 bezeichnete elektrische Linearantrieb umfasst eine Arbeitseinheit 2 und ein lösbar mit dieser gekoppeltes Motormodul 3. Diese beiden Komponenten sind in Richtung einer gedachten, strichpunktiert angedeuteten Montageachse 4 aufeinanderfolgend angeordnet. Letztere bildet gleichzeitig die Längsachse des Linearantriebes 1.

Die Arbeitseinheit 2 enthält ein zur besseren Unterscheidung als Hauptgehäuse 5 bezeichnetes längliches Gehäuse, dessen Längsachse 6 mit der Montageachse 4 zusammenfällt. In einer das Hauptgehäuse 5 in Längsrichtung durchziehenden Aufnahme 7 ist ein als einheitlich handhabbares Modul ausgeführter Spindeltrieb 8 in austauschbarer Weise untergebracht. Außen am Hauptgehäuse 5 ist ein Abgriffsteil 12 linear verstellbar gelagert, sodass es relativ zum Hauptgehäuse 5 eine durch einen Doppelpfeil markierte, hin und her gehende Linearbewegung 13 ausführen kann. Die Bewegungsrichtung ist mit der Längsachse 6 gleichgerichtet.

Das Motormodul 3 ist rückseitig an das Hauptgehäuse 5 angesetzt und beinhaltet einen Elektromotor 14, der über den Spindeltrieb 8 mit dem Abgriffsteil 12 in Wirkverbindung steht, sodass aus der vom Elektromotor 14 ausgegebenen Rotationsbewegung die für das Abtriebsteil 12 gewünschte Linearbewegung 13 abgeleitet wird.

An dem Abgriffsteil 12 sind Befestigungsmittel 15 beliebiger Art vorgesehen, über die sich eine beliebige Komponente anbringen lässt, die linear verstellt werden soll, beispielsweise ein Teil einer Maschine oder ein zu Handhabungszwecken eingesetzter Greifer.

Das Abgriffsteil 12 ist beim Ausführungsbeispiel schlittenartig ausgebildet und unter Zwischenschaltung geeigneter Linearführungsmittel 16 längsseits am Hauptgehäuse 5 verschiebbar gelagert. Ein Jochabschnitt 17 des Abgriffsteils 12 ragt vor die vordere Stirnfläche 18 des Hauptgehäuses 5 in einen der dort vorgesehenen vorderen Öffnung 22 der Aufnahme 7 vorgelagerten Bereich.

Der Spindeltrieb 8 verfügt über zwei zueinander beabstandete vordere und rückwärtige Lagerteile 23a, 23b, die im Innern der Aufnahme 7 fixiert sind, wobei das vordere Lagerteil 23a im Bereich der vorderen Öffnung 22 und das rückwärtige Lagerteil 23b im Bereich der zur rückwärtigen Stirnfläche 24 des Hauptgehäuses 5 ausmündenden rückwärtigen Öffnung 25 der Aufnahme 7 platziert ist. Zwischen den beiden Lagerteilen 23a, 23b erstreckt sich das nach Art einer Gewindespindel ausgeführte stangenartige Eingangsteil 26 des Spindeltriebes 8, das in den beiden Lagerteilen 23a, 23b jeweils drehbar gelagert ist. Durch entsprechende Ausgestaltung mindestens einer dieser beiden Lagerungen ist außerdem dafür gesorgt, dass das Eingangsteil 26 in Längsrichtung unbeweglich fixiert ist.

Auf dem spindelartigen Eingangsteil 26 sitzt ein nach Art einer Mutter ausgebildetes Ausgangsteil 27 des Spindeltriebes, das über mindestens ein sich axial erstreckendes Koppelelement 28, welches im Bereich der vorderen Öffnung 22 aus dem Hauptgehäuse 5 herausragt, mit dem Jochabschnitt 17 axial bewegungsgekoppelt ist. Das Ausgangsteil 27 ist drehfest fixiert, beispielsweise durch eine entsprechende Verbindung mit dem Jochabschnitt 17, und steht mit dem Eingangsteil 26 in Schraubeingriff. Somit führt eine Rotation des Eingangsteils 26 entsprechend der gewählten Drehrichtung zu einer Linearbewegung des Ausgangsteils 27 relativ zum Eingangsteil 26 in der einen oder anderen Richtung, was aufgrund der geschilderten Bewegungskopplung die oben schon erläuterte Linearbewegung 13 des Abgriffteils 12 zur Folge hat.

Das Motormodul 3 ist mit einer stirnseitigen Installationsfläche 32 an die rückseitige Stirnfläche 24 des Hauptgehäuses 5 der Arbeitseinheit 2 angesetzt. Die Installationsfläche 32 befindet sich an einem zur besseren Unterscheidung als Modulgehäuse 33 bezeichneten Gehäuse des Motormoduls 3, in dem der Elektromotor 14, insbesondere nach Art einer Patrone, untergebracht ist. Die Montage des Motormoduls 3 am Hauptgehäuse 5 erfolgt durch Ansetzen in Richtung der Montageachse 4 im Rahmen einer durch einen Pfeil verdeutlichten Ansetzbewegung 34. Das Abnehmen des Motormoduls 3 vom Hauptgehäuse 5 geschieht durch eine Bewegung in entgegengesetzter Richtung.

Das Ansetzen des Motormoduls 3 an das Hauptgehäuse 5 ist ein Steckvorgang. Bei diesem Steckvorgang greifen zueinander komplementäre erste und zweite Steckzentriermittel 35a, 35b quer zur Montageachse 4 formschlüssig ineinander. Auf diese Weise ist die Relativposition von Hauptgehäuse 5 und Motormodul 3 quer zur Längsachse 6 des Hauptgehäuses 5 festgelegt.

Bevorzugt sind die dem Hauptgehäuse 5 zugeordneten ersten Steckzentriermittel 35a von einem über die rückwärtige Stirnfläche 24 des Hauptgehäuses 5 vorstehenden Abschnitt des rückwärtigen Lagerteils 23b gebildet. Dieser Abschnitt hat zumindest partiell eine im Wesentlichen zylindrische Außenkontur, die passend in eine zur Installationsfläche 32 hin offene komplementäre Ausnehmung 36 des Modulgehäuses 33 eingreift, die die zweiten Steckzentriermittel 35b repräsentiert.

Beim Ausführungsbeispiel ist zumindest das rückwärtige Lagerteil 23b in die Aufnahme 7 eingeschraubt. Um hierbei das bequeme Ansetzen eines Schraubwerkzeuges zu ermöglichen, ist die Umfangsfläche des über das Hauptgehäuse 5 vorstehenden Abschnittes des rückwärtigen Lagerteils 23b an sich diametral gegenüberliegenden Stellen mit jeweils einer Abflachung 37 versehen. Auch eine Mehrkantkontur, beispielsweise als Sechskant, wäre denkbar.

Das an das Hauptgehäuse 5 angesetzte und insbesondere angesteckte Motormodul 3 wird durch mindestens eine Befestigungsschraube 37 in der angesetzten Position axial arretiert, sodass es in Richtung der Montageachse 4 nicht mehr abgenommen werden kann. Die Befestigungsschrauben 37 haben mithin den Zweck, den axialen Zusammenhalt von Hauptgehäuse 5 und Motormodul 3 zu gewährleisten. Um das Motormodul 3 zu entfernen, werden die Befestigungsschrauben 37 gelöst, sodass das Motormodul 3 abgezogen werden kann. Die Befestigungsschrauben 37 können auch eine Verdrehsicherungsfunktion zwischen dem Motormodul 3 und der Antriebseinheit 2 erfüllen.

Um diese Arretierfunktion zu erfüllen, reichen in der Regel eine, höchstens zwei Befestigungsschrauben 37 aus. Jede Befestigungsschraube 37 durchsetzt das Modulgehäuse 33, an dem sie sich mit einem Kopf 38 abstützt, und ist in eine zur rückwärtigen Stirnfläche 24 offene Gewindebohrung 39 des Hauptgehäuses 5 lösbar eingeschraubt.

Zur drehmomentmäßigen Kupplung des Eingangsteils 26 des Spindeltriebes 8 mit dem Elektromotor 14 ist eine reine Steckkupplung 41 vorgesehen. Die zu kuppelnden Elemente können mit einem bloßen Steckvorgang so in Eingriff gebracht werden, dass die gewünschte Drehmitnahme erreicht wird. Dieser Steckvorgang ist identisch mit der Ansetzbewegung 34 des Motormoduls 3. Das Lösen des Kupplungeingriffes geschieht, wiederum selbstständig, beim Abnehmen des Motormoduls 3 in der Richtung der Montageachse 4.

In vorteilhafter Weise ist die Steckkupplung 41 unmittelbar von einem Zahnradgetriebe 43 gebildet. Hierzu enthält sie ein mit dem Eingangsteil 26 des Spindeltriebes 8 drehfest verbundenes erstes Getriebezahnrad 44 und ein mit dem rotativ angetriebenen Abtriebsteil 46 antriebsmäßig gekoppeltes zweites Getriebezahnrad 45. Das erste Getriebezahnrad 44 ist koaxial zu dem Eingangsteil 26 angeordnet, wobei seine Drehachse 47 gleich wie die Montageachse 4 ausgerichtet ist. Letzteres gilt auch für die Drehachse 48 des zweiten Getriebezahnrades 45.

Die beiden Getriebezahnräder 44, 45 sind zweckmäßigerweise als sogenannte geradverzahnte Stirnräder ausgeführt, bei denen die Verzahnungen am radial orientierten Außenumfang sitzen. Indem ferner die Drehachsen 47, 48 so angeordnet sind, dass sie parallel versetzt zueinander verlaufen, ergibt sich bei hergestelltem Kupplungseingriff ein Zustand, bei dem die beiden Getriebezahnräder 44, 45 in Richtung der Montageachse 4 auf gleicher Höhe nebeneinander angeordnet sind.

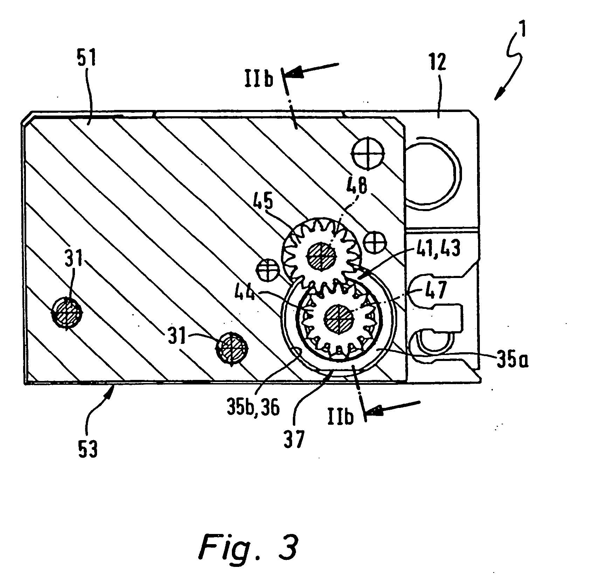

Das erste Getriebezahnrad 44 steht rückseitig über das Hauptgehäuse 5 vor, wobei es auch den ersten Steckzentriermitteln 35a vorgelagert ist. Das zweite Getriebezahnrad 45 sitzt in einem einen Abschnitt des Modulgehäuses 33 bildenden Getriebegehäuse 51, wobei der entsprechende Aufnahmeraum des Getriebegehäuses 51 über die Ausnehmung 36 zugänglich ist. Auch eine umgekehrte Anordnung ist allerdings möglich. Wird das Motormodul 3 unter Ausführung der Ansetzbewegung 34 an das Hauptgehäuse 5 angesetzt, taucht das erste Getriebezahnrad 44 durch die Ausnehmung 36 hindurch in das Getriebegehäuse 51 ein, wobei seine Verzahnung auf die Verzahnung des zweiten Getriebezahnrads 45 aufgesteckt wird, sodass die beiden Getriebezahnräder 44, 45 gemäß Fig. 3 an einer Stelle ihres Umfanges miteinander kämmen.

Dieser Ansetzvorgang reicht aus, um den Kupplungseingriff herzustellen. Beim Ansetzen des Motormoduls 3 wird also selbsttätig bzw. automatisch der die Drehmomentübertragung garantierende Zahnradeingriff hergestellt.

Umgekehrt wird der Zahnradeingriff wiederum selbsttätig aufgehoben, wenn das Motormodul 3 entgegen der Ansetzrichtung 34 vom Hauptgehäuse 5 abgenommen wird.

Da das erste Getriebezahnrad 44 unabhängig von der momentan zwischen dem Eingangsteil 26 und dem Ausgangsteil 27 eingenommenen Relativposition eine gleichbleibende, das heißt ortsfest fixierte Lage bezüglich des Hauptgehäuses 5 einnimmt, kann das Motormodul 3 bei jeder derartigen Relativposition installiert und deinstalliert werden. Es besteht also beispielsweise die Möglichkeit, das Motormodul 3 im Falle eines Defekts auszutauschen, ohne die Arbeitseinheit 2 vom Einsatzort entfernen zu müssen und unter Beibehaltung der momentanen Position des Abgriffsteils 12.

In dem Modulgehäuse 33 kann zwischen dessen Abtriebsteil 46 und dem zweiten Getriebezahnrad 45 ein schematisch angedeutetes Zwischengetriebe 52 sitzen. Mit diesem lässt sich die Abtriebsdrehzahl des Elektromotors nach Bedarf unter- oder übersetzen und dadurch die von der Drehzahl des Elektromotors 14 abhängige Drehzahl des zweiten Getriebezahnrades 45 vorgeben. Bei dem Zwischengetriebe 52 handelt es sich vorzugsweise um ein Planetengetriebe. Durch Bereitstellung mehrerer Motormodule 3 mit unterschiedlichen Zwischengetrieben 52 können somit über den Austausch des Motormoduls 3 verschiedene Drehzahlüber- bzw. -untersetzungen nach Bedarf vorgegeben werden.

Das zweite Getriebezahnrad 45 ist zweckmäßigerweise koaxial zum Abtriebsteil 46 des Elektromotors 14 angeordnet. Indem jedoch die beiden Getriebezahnräder 44, 45 seitlich versetzt zueinander angeordnet sind, kann auch ein relativ große Querabmessungen aufweisender Elektromotor 14 noch so in dem Modulgehäuse 33 untergebracht werden, dass die Möglichkeit besteht, durch das Motormodul 3 und das Hauptgehäuse 5 eine in einer gemeinsamen Ebene liegende Montagefläche 53 zu definieren, über die der Linearantrieb an einer Tragstruktur festlegbar ist.

Der gesamte Spindeltrieb 8 ist zweckmäßigerweise als ein einheitlich handhabbares Modul ausgebildet, das sich als Baueinheit in die Aufnahme 7 einsetzen und bei Bedarf auch wieder entfernen lässt. Dadurch kann der Linearantrieb bei Bedarf rasch umgerüstet werden, beispielsweise auf einen Spindeltrieb 8 mit größerer oder geringerer Gewindesteigung. Außerdem erweist sich die Montage des gesamten Linearantriebes durch diese Modulbauweise als besonders einfach.

Die für den Betrieb des Elektromotors 14 erforderliche elektrische Energie und Betätigungssignale können über eine am Modulgehäuse 33 vorgesehene elektromechanische Schnittstelle 54 eingespeist werden. An dieser Schnittstelle können überdies Positionssignale abgegriffen werden, die ein im Modulgehäuse 33 angeordneter, nicht näher dargestellter Encoder in Abhängigkeit von der Drehbewegung und/oder Drehposition des Abtriebsteils 46 des Elektromotors 14 liefert. Auf diese Weise ist eine indirekte Erfassung der Position des beim Ausführungsbeispiel als Schlittenkörper ausgebildeten Abgriffteils 12 möglich.

## Patentansprüche

1. Elektrischer Linearantrieb, mit einem Hauptgehäuse (5), an dem ein den Abgriff einer Linearbewegung ermöglichendes Abgriffsteil (12) linear verstellbar gelagert ist, das antriebsmäßig mit dem Ausgangsteil (27) eines in dem Hauptgehäuse (5) angeordneten Spindeltriebes (8) gekoppelt ist, dessen drehbares Eingangsteil (26) über eine Kupplung mit einem rückseitig an dem Hauptgehäuse (5) angeordneten Elektromotor (14) in Antriebsverbindung steht, **dadurch gekennzeichnet, dass** die Kupplung als reine Steckkupplung (41) ausgeführt und unmittelbar von einem Zahnradgetriebe (43) gebildet ist, das ein mit dem Eingangsteil (26) des Spindeltriebes (8) drehfest verbundenes, bezüglich des Hauptgehäuses (5) ortsfest fixiertes erstes Getriebezahnrad (44) und ein mit dem Abtriebsteil (46) des Elektromotors (14) verbundenes zweites Getriebezahnrad (45) enthält, wobei das zweite Getriebezahnrad (45) gemeinsam mit dem Elektromotor (14) Bestandteil eines Motormoduls (3) ist, das unabhängig von der momentan zwischen dem Eingangsteil (26) und dem Ausgangsteil (27) des Spindeltriebes (8) eingenommenen Relativposition, und bei gleichzeitig selbsttätigem Herstellen bzw. Aufheben des Zahnradeingriffes zwischen den beiden Getriebezahnrädern (44, 45), rückseitig am Hauptgehäuse (5) ansetzbar und abnehmbar ist.

2. Linearantrieb nach Anspruch 1, **dadurch gekennzeichnet, dass** die beiden Getriebezahnräder (44, 45) als Stirnräder ausgeführt sind, deren Drehachsen (47, 48) parallel versetzt zueinander verlaufen und gleich ausgerichtet sind wie eine gedachte Montageachse (4), entlang der das Motormodul (3) beim Ansetz- und Abnehmvorgang relativ zum Hauptgehäuse (5) zu verlagern ist.

3. Linearantrieb nach Anspruch 2, **dadurch gekennzeichnet, dass** die Montageachse (4) mit der Längsachse (6) des Hauptgehäuses (5) gleichgerichtet ist.

4. Linearantrieb nach Anspruch 2 oder 3, **dadurch gekennzeichnet, dass** die beiden Getriebezahnräder (44, 45) als geradverzahnte Stirnräder ausgebildet sind.

5. Linearantrieb nach einem der Ansprüche 1 bis 4, **dadurch gekennzeichnet, dass** das erste Getriebezahnrad (44) rückseitig über das Hauptgehäuse (5) vorsteht und bei angesetztem Motormodul (3) in ein zu diesem gehörendes Getriebegehäuse (51) eintaucht, in dem sich das zweite Getriebezahnrad (45) befindet.

6. Linearantrieb nach einem der Ansprüche 1 bis 5, **gekennzeichnet durch** dem Hauptgehäuse (5) und dem Motormodul (3) zugeordnete komplementäre Steckzentriermittel (35a, 35b), die im aneinander angesetzten Zustand ineinandergreifen, um die Lage der beiden Getriebezahnräder (44, 45) relativ zueinander vorzugeben.

7. Linearantrieb nach Anspruch 6, **dadurch gekennzeichnet, dass** die Steckzentriermittel (35a, 35b) koaxial zur Drehachse (47) des ersten Getriebezahnrades (44) angeordnet sind.

8. Linearantrieb nach Anspruch 6 oder 7, **dadurch gekennzeichnet, dass** die dem Hauptgehäuse (5) zugeordneten Steckzentriermittel (35a) von einem rückseitig über das Hauptgehäuse (5) vorstehenden und bezüglich des Hauptgehäuses (5) unbeweglich fixierten Lagerteil (23b) des Spindeltriebes (8) gebildet sind.

9. Linearantrieb nach einem der Ansprüche 1 bis 8, **dadurch gekennzeichnet, dass** das Motormodul (3) an das Hauptgehäuse (5) ansteckbar und durch mindestens eine Befestigungsschraube (37) in der angesteckten Position arretierbar ist.

10. Linearantrieb nach einem der Ansprüche 1 bis 9, **dadurch gekennzeichnet, dass** das Motormodul (3) ein Modulgehäuse (33) aufweist, in das der Elektromotor (14), insbesondere lösbar, eingesetzt ist.

11. Linearantrieb nach Anspruch 10, **dadurch gekennzeichnet, dass** in dem Modulgehäuse (33) zwischen dem Elektromotor (14) und dem zweiten Getriebezahnrad (45) ein insbesondere als Planetengetriebe ausgeführtes Zwischengetriebe (52) angeordnet ist.

12. Linearantrieb nach einem der Ansprüche 1 bis 11, **dadurch gekennzeichnet, dass** das Hauptgehäuse (5), das Abgriffsteil (12) und der Spindeltrieb (8) zu einer Arbeitseinheit (2) zusammengefasst sind.

13. Linearantrieb nach Anspruch 12, **dadurch gekennzeichnet, dass** der Spindeltrieb (8) als lösbar in einer Aufnahme (7) des Hauptgehäuses (5) fixiertes Modul ausgebildet ist.

14. Linearantrieb nach einem der Ansprüche 1 bis 13, **dadurch gekennzeichnet, dass** das Ausgangsteil (27) des Spindeltriebes (8) nach Art einer Mutter ausgebildet ist und auf dem nach Art einer Gewindespindel ausgebildeten Eingangsteil (26) läuft, wobei es mit dem Abgriffsteil (12) bewegungsgekoppelt ist.

15. Linearantrieb nach einem der Ansprüche 1 bis 14, **dadurch gekennzeichnet, dass** das Abgriffsteil (12) ein über Linearführungsmittel (16) relativ zum Hauptgehäuse (5) verstellbar gelagerter Schlittenkörper ist.

16. Linearantrieb nach einem der Ansprüche 1 bis 15, **dadurch gekennzeichnet, dass** das Motormodul (3) und das Hauptgehäuse (5) eine in einer gemeinsamen Ebene liegende Montagefläche (53) definieren.

## Claims

1. Electric linear drive with a main housing (5) on which a takeoff part (12) permitting the takeoff of a linear movement is mounted for linear traverse and coupled to the output part (27) of a spindle drive (8) located in the main housing (5), the rotatable input part (26) of which is drive-connected to an electric motor (14) located at the rear of the main housing (5) via a clutch, **characterised in that** the clutch is designed as a pure plug-in clutch (41) directly represented by a gear train (43) comprising a first gear wheel (44) non-rotatably connected to the input part (26) of the spindle drive (8) and located in a fixed position relative to the main housing (5) and a second gear wheel (45) connected to the output part (46) of the electric motor (14), wherein the first gear wheel (45) together with the electric motor (14) is part of a motor module (3) which can be fitted to and removed from the rear of the main housing (5) independent of the relative positions currently adopted by the input part (26) and the output part (27) of the spindle drive (8) while simultaneously and automatically establishing or cancelling the engagement between the two gear wheels (44, 45).

2. Linear drive according to claim 1, **characterised in that** the two gear wheels (44, 45) are designed as spur gears with axes of rotation (47, 48) extending parallel and offset to one another and aligned to an imaginary mounting axis (4) along which the motor module (3) has to be displaced during the fitting and removal process.

3. Linear drive according to claim 2, **characterised in that** the mounting axis (4) coincides with the longitudinal axis (6) of the main housing (5).

4. Linear drive according to claim 2 or 3, **characterised in that** the two gear wheels (44, 45) are designed as straight-cut spur gears.

5. Linear drive according to any of claims 1 to 4, **characterised in that** the first gear wheel (44) projects beyond the rear of the main housing (5) and, in the fitted state of the motor module (3), dips into a gear housing (51) in which the second gear wheel (45) is located.

6. Linear drive according to any of claims 1 to 5, **characterised by** complementary plug-in centring means (35a, 35b) assigned to the main housing (5) and the motor module (3), which, when fitted to one another, engage one another to predetermine the relative positions of the two gear wheels (44, 45).

7. Linear drive according to claim 6, **characterised in that** the plug-in centring means (35a, 35b) are coaxial with the axis of rotation (47) of the first gear wheel (44).

8. Linear drive according to claim 6 or 7, **characterised in that** the plug-in centring means (35a) assigned to the main housing (5) are represented by a bearing part (23b) of the spindle drive (8), which projects beyond the rear of the main housing (5) and is located in a fixed position relative to the main housing (5).

9. Linear drive according to any of claims 1 to 8, **characterised in that** the motor module (3) can be fitted to the main housing (5) and secured in the fitted position by at least one mounting screw (37).

10. Linear drive according to any of claims 1 to 9, **characterised in that** the motor module (3) incorporates a module housing (33) into which the electric motor (14) is, in particular releasably, installed.

11. Linear drive according to claim 10, **characterised in that** an intermediate gear (52) designed in particular as a planetary gear is provided between the electric motor (14) and the second gear wheel (45).

12. Linear drive according to any of claims 1 to 11, **characterised in that** the main housing (5), the takeoff part (12) and the spindle drive (8) are combined to form an operating unit (2).

13. Linear drive according to claim 12, **characterised in that** the spindle drive (8) is designed as a module releasably located in a location (7) of the main housing (5).

14. Linear drive according to any of claims 1 to 13, **characterised in that** the output part (27) of the spindle drive (8) is designed as a nut and runs on the input part (26) designed as a threaded spindle, being coupled for movement with the takeoff part (12).

15. Linear drive according to any of claims 1 to 14, **characterised in that** the takeoff part (12) is a slide body movable relative to the main housing (5) by way of linear guide means (16).

16. Linear drive according to any of claims 1 to 15, **characterised in that** the motor module (3) and the main housing (5) define a mounting surface (53) lying in a common plane.

## Revendications

1. Entraînement linéaire électrique, avec un boîtier principal (5) sur lequel une partie de prise (12) permettant de capter un mouvement linéaire est montée mobile de façon linéaire, qui est couplée en entraînement à la partie de sortie (27) d'une commande à vis (8) placée dans le boîtier principal (5), dont la partie d'entrée rotative (26) est en liaison d'entraînement, par l'intermédiaire d'un accouplement, avec un moteur électrique (14) placé à l'arrière sur le boîtier principal (5), **caractérisé en ce que** l'accouplement est réalisé en accouplement à enfichage pur (41) et est formé directement par un mécanisme (43) de roues dentée, qui comprend une première roue dentée (44) stationnaire par rapport au boîtier principal (5), reliée de manière solidaire en rotation à la partie d'entrée (26) de la commande à vis (8), et une deuxième roue dentée (45) reliée à la partie de sortie (46) du moteur électrique (14), la deuxième roue dentée (45) faisant partie, avec le moteur électrique (14), d'un module moteur (3) qui peut être monté sur et déposé depuis la face arrière du boîtier principal (5) indépendamment de la position relative occupée momentanément par la partie d'entrée (26) et la partie de sortie (27) de la commande à vis (8) et en établissant ou supprimant automatiquement, en même temps, la prise d'engrenage entre les deux roues dentées (44, 45).

2. Entraînement linéaire selon la revendication 1, **caractérisé en ce que** les deux roues dentées (44, 45) sont conformées en roues droites dont les axes de rotation (47, 48) s'étendent parallèlement et avec un décalage l'un par rapport à l'autre et sont de même orientation qu'un axe de montage imaginaire (4) le long duquel le module moteur (3) doit être déplacé par rapport au boîtier principal (5) lors de l'opération de montage et de dépose.

3. Entraînement linéaire selon la revendication 2, **caractérisé en ce que** l'axe de montage (4) est de même orientation que l'axe longitudinal (6) du boîtier principal (5).

4. Entraînement linéaire selon la revendication 2 ou 3, **caractérisé en ce que** les deux roues dentées (44, 45) sont conformées en roues droites à denture droite.

5. Entraînement linéaire selon l'une des revendications 1 à 4, **caractérisé en ce que** la première roue dentée (44) dépasse du boîtier principal (5) à l'arrière et, le module moteur (3) étant en place, s'enfonce dans un boîtier de mécanisme (51) faisant partie de celui-ci, dans lequel se trouve la deuxième roue dentée (45).

6. Entraînement linéaire selon l'une des revendications 1 à 5, **caractérisé par** des moyens de centrage à enfichage complémentaires (35a, 35b) associés au boîtier principal (5) et au module moteur (3), qui s'engagent l'un dans l'autre dans l'état rapproché l'un de l'autre, afin d'imposer les positions des deux roues dentées (44, 45) l'une par rapport à l'autre.

7. Entraînement linéaire selon la revendication 6, **caractérisé en ce que** les moyens de centrage à enfichage (35a, 35b) sont placés de manière coaxiale à l'axe de rotation (47) de la première roue dentée (44).

8. Entraînement linéaire selon la revendication 6 ou 7, **caractérisé en ce que** les moyens de centrage à enfichage (35a) associés au boîtier principal (5) sont formés par une partie support (23b) de la commande à vis (8) dépassant à l'arrière du boîtier principal (5) et immobile par rapport au boîtier principal (5).

9. Entraînement linéaire selon l'une des revendications 1 à 8, **caractérisé en ce que** le module moteur (3) peut être enfiché sur le boîtier principal (5) et peut être immobilisé dans la position enfichée par au moins une vis de fixation (37).

10. Entraînement linéaire selon l'une des revendications 1 à 9, **caractérisé en ce que** le module moteur (3) présente un boîtier de module (33) dans lequel le moteur électrique (14) est inséré, en particulier de manière amovible.

11. Entraînement linéaire selon la revendication 10, **caractérisé en ce qu'**un engrenage intermédiaire (52) réalisé en particulier comme un engrenage planétaire est placé dans le boîtier de module (33) entre le moteur électrique (14) et la deuxième roue dentée (45).

12. Entraînement linéaire selon l'une des revendications 1 à 11, **caractérisé en ce que** le boîtier principal (5), la partie de prise (12) et la commande à vis (8) sont réunis en une unité active (2).

13. Entraînement linéaire selon la revendication 12, **caractérisé en ce que** la commande à vis (8) est conformée en un module fixé de façon amovible dans un logement (7) du boîtier principal (5).

14. Entraînement linéaire selon l'une des revendications 1 à 13, **caractérisé en ce que** la partie de sortie (27) de la commande à vis (8) est réalisée à la manière d'un écrou et se déplace sur la partie de sortie (26) conformée à la manière d'une tige filetée, en étant couplée en mouvement à la partie de prise (12).

15. Entraînement linéaire selon l'une des revendications 1 à 14, **caractérisé en ce que** la partie de sortie (12) est un corps de chariot monté mobile par rapport au boîtier principal (5) par l'intermédiaire de moyens de guidage linéaire (16).

16. Entraînement linéaire selon l'une des revendications 1 à 15, **caractérisé en ce que** le module moteur (3) et le boîtier principal (5) définissent une surface de montage (53) située dans un plan commun.
